# EUROPÄISCHE PATENTSCHRIFT

(11) **EP 3 171 125 B1**
(45) Veröffentlichungstag und Bekanntmachung des Hinweises auf die Patenterteilung: **24.01.2018**
(21) Anmeldenummer: 16186265.1
(22) Anmeldetag: 30.08.2016
(51) Int. Cl.: G01B 11/06, G01B 7/06

(54) **VERFAHREN ZUR ERKENNUNG EINES PROFILS EINER EINEN DETEKTIONSBEREICH EINES ABSTANDSSENSORS DURCHLAUFENDEN ANORDNUNG**
METHOD FOR DETECTING A PROFILE OF AN ASSEMBLY PASSING THROUGH A DETECTION AREA OF A DISTANCE SENSOR
PROCEDE DE RECONNAISSANCE D'UN PROFIL D'UN SYSTEME PASSANT DANS UNE ZONE DE DETECTION D'UN CAPTEUR DE DISTANCE

(30) Priorität: 19.11.2015 DE 102015120067
(43) Veröffentlichungstag der Anmeldung: 24.05.2017
(73) Patentinhaber: SICK AG, 79183 Waldkirch/Breisgau (DE)
(72) Erfinder: Erlewein, Patrick, 79104 Freiburg (DE)
(74) Vertreter: Manitz Finsterwald Patentanwälte PartmbB

(56) Entgegenhaltungen:
- EP-A2- 0 686 827
- DE-A1- 19 542 554
- US-A- 6 133 948

## Beschreibung

Die vorliegende Erfindung betrifft ein Verfahren zur Erkennung eines Profils einer einen Detektionsbereich eines Abstandssensors durchlaufenden Anordnung. Insbesondere bei automatisiert ablaufenden Herstellungs-, Bearbeitungs- oder Transportprozessen ist es erforderlich, diese Prozesse ebenfalls automatisch auf mögliche Fehler hin zu überwachen. Beispielsweise können Geometrien von Produkten, Zwischenprodukten, Transportgut oder ähnlichem während eines Transports erfasst und mit einer erwarteten Geometrie verglichen werden, um Abweichungen feststellen und sie gegebenenfalls signalisieren zu können.

Ein vergleichsweise einfaches, aber grundlegendes Kriterium für die Integrität einer Anordnung kann beispielsweise ein Profil der Anordnung sein. Das Profil ist dabei auf eine Erstreckung der Anordnung in eine Erstreckungsrichtung bezogen. Unter einem Profil ist dann ein Verlauf dieser Erstreckung entlang einer Verlaufsrichtung zu verstehen, wobei die Verlaufsrichtung vorzugsweise senkrecht zu der Erstreckungsrichtung ausgerichtet ist. Beispielsweise kann das Profil auf eine vertikale Höhe der Anordnung bezogen sein und als Höhenverlauf entlang einer horizontalen Bewegungsrichtung der Anordnung definiert sein.

Ein Verfahren zur Erkennung eines Profils einer Anordnung ist z.B. aus US 6,133,948 A1 bekannt. Bei der Anordnung kann es sich um ein Einzelstück, z.B. ein einzelnes Product oder Wertstück oder eine einzelne (gefüllte oder leere) Verpackung, handeln, dessen Profil erfasst werden soll. Das zu erkennende Profil ist dann an diesem Einzelstück ausgebildet. Über die Profilerkennung kann so z.B. feststellbar sein, dass das Einzelstück eine andere als eine erwartete Form aufweist oder dass ein anderes als das erwartete Einzelstück vorliegt.

Die Anordnung kann aber auch mehrere Objekte umfassen, die relativ zueinander angeordnet sind. Wenn die einzelnen Objekte untereinander unterschiedliche Profile oder auch lediglich eine unterschiedliche Erstreckung in Erstreckungsrichtung (z.B. unterschiedliche Höhe) aufweisen, kann mittels der Profilerkennung außerdem eine Reihenfolge der Objekte innerhalb der Anordnung ermittelbar oder zumindest eine Abweichung von einer erwarteten Reihenfolge feststellbar sein.

Eine sich entlang des Profilverlaufs verändernde Erstreckung der Anordnung in Erstreckungsrichtung kann insbesondere mittels eines Abstandssensors erfasst werden, der entsprechend relativ zu der Anordnung (z.B. oberhalb der Anordnung) angeordnet wird und dazu ausgebildet ist, einen Abstand einer in einem Detektionsbereich des Abstandssensors befindlichen jeweiligen Oberfläche der Anordnung zu dem Abstandssensor zu ermitteln. Aus dem gemessenen Abstand kann dann direkt auf die Lage (z.B. Höhe) der jeweiligen Oberfläche der Anordnung geschlossen werden. Um Änderungen der Lage entlang des Profilverlaufs zu erfassen, kann der Abstandssensor relativ zu der Anordnung parallel zum Profilverlauf bewegt werden, so dass er insgesamt eine Folge von Abständen jeweiliger Oberflächen der Anordnung - je nachdem welche sich gerade in dem Detektionsbereich des Abstandssensors befindet - erfassen und die Anordnung auf diese Weise abtasten kann.

Eine solche Abtastung erfolgt vorteilhafterweise, während sich die Anordnung ohnehin bewegt, beispielsweise wenn die Anordnung zwischen zwei Prozessschritten von einer Verarbeitungsstelle zu einer anderen transportiert wird. In einem solchen Fall ist der Abstandssensor vorzugsweise ortsfest montiert, wobei der Verlauf des Profils dann parallel zu der Bewegungsrichtung ist, in der die Anordnung den Detektionsbereich des Abstandssensors durchläuft.

Das Ermitteln des Abstands einer jeweiligen Oberfläche der Anordnung zu dem Abstandssensor erfolgt vorzugsweise fortlaufend, während die Anordnung den Detektionsbereich des Abstandssensors durchläuft. Das bedeutet jedoch nicht, dass das Ermitteln ununterbrochen erfolgen muss. Vielmehr können einzelne Abstandswerte getaktet, z.B. gemäß einer vorgegebenen oder vorgebbaren und insbesondere regelmäßigen Taktung, ermittelt werden.

Alternativ zu einer Profilbestimmung mittels eines Abstandssensors kann eine Profilerkennung grundsätzlich auch auf Abstandsmessungen basieren, denen ein anderes Messprinzip zugrunde liegt. Abstände können beispielsweise aus der Auswertung von mittels eines Kamerasystems aufgezeichneten Bilddaten ermittelt werden. Hierzu kann beispielsweise außerdem vorgesehen sein, dass eine Linie in Verlaufsrichtung des Profils auf die Anordnung projiziert und aus einer dazu seitlichen Richtung optisch aufgezeichnet wird, so dass aus dem Bild der Linie auf das Profil geschlossen werden kann. Oder die Oberfläche der Anordnung wird durch einen Laserscanner abgetastet, der die Oberfläche auch flächig und nicht lediglich linear in Verlaufsrichtung erfassen kann. Derartige Systeme können das Profil der Anordnung unter Umständen schneller, präziser oder umfassender ermitteln. Allerdings können sie im Vergleich zur Verwendung eines einfachen Abstandssensors vergleichsweise teuer sein. Zudem erzeugen sie eine Vielzahl von Daten, was die Auswertung erschweren kann.

Je mehr Informationen über das zu erkennende bzw. zu überprüfende Profil erfasst werden, desto umfassender kann zwar der Vergleich des erfassten Profils mit dem zu erwartenden Profil ausfallen. Jedoch kann die Auswertung, je umfassender sie ist, auch desto aufwendiger und fehleranfälliger werden. Es kann aber erwünscht sein, dass die Auswertung besonders zuverlässig ist und dabei möglichst geringe Anforderungen an die Rechenleistung stellt. Denn dann kann die Auswertung vorteilhafterweise in dem Abstandssensor selbst, z.B. kostengünstig innerhalb eines eingebetteten Systems bzw. auf einem Mikrocontroller, ausgeführt werden.

Es ist eine Aufgabe der Erfindung, ein Verfahren zur Erkennung eines Profils einer Anordnung bereitzustellen, das zuverlässig und dabei vergleichsweise einfach und wenig rechenintensiv ist.

Die Aufgabe wird gelöst durch ein Verfahren mit den Merkmalen des Anspruchs 1.

Insbesondere wird die Aufgabe dadurch gelöst, dass das Verfahren entsprechend einem endlichen Automaten ausgebildet ist. Ein solcher endlicher Automat, auch als Zustandsmaschine (state machine) bezeichnet, reduziert ein System auf eine endliche Anzahl an Zuständen und definiert Bedingungen, nach denen der endliche Automat von einem Zustand in einen anderen übergeht. Statt dass zur Profilerkennung zunächst so viel Information über das Profil zusammengetragen wird, wie mittels der jeweiligen Vorrichtung messbar ist, und anschließend der gesamte so erhaltene Datensatz rechnerisch ausgewertet wird, kann durch den endlichen Automaten bereits die Erfassung der Abstände auf Zustände und Zustandsübergänge abgebildet werden, so dass die Information auf das für die Profilerkennung Wesentliche reduziert werden kann. Es brauchen dann nicht alle einzelnen Abstandswerte, die mittels des Abstandssensors bestimmt werden, gespeichert zu werden, sondern es kann insbesondere reichen, eine Zustandsabfolge aufzuzeichnen.

Der endliche Automat weist vorzugsweise zumindest einen Ruhezustand, einen Auswertezustand und mehrere Messzustände auf.

Dabei ist der Ruhezustand insbesondere als Ausgangszustand vorgesehen, in dem sich der endliche Automat zu Beginn und/oder zum Ende einer jeweiligen Profilerkennung befindet. Es kann vorgesehen sein, dass in diesem Ruhezustand keine Abstände ermittelt werden, sondern lediglich ein Aktivierungsereignis abgewartet wird, infolge dessen die eigentliche Profilerkennung damit beginnt, dass der Ruhezustand verlassen wird. Insbesondere werden in dem Ruhezustand keine Abstandswerte oder Zustandsabfolgen aufgezeichnet. Der Ruhezustand entspricht insofern einer Art Leerlauf des Systems.

Die Messzustände dienen insbesondere dazu, dass verschiedene ermittelte Abstände auf einen jeweiligen Zustand reduziert werden können. Jeder Messzustand kann dabei einem jeweils anderen spezifischen (nominellen) Abstand der gerade in dem Detektionsbereich des Abstandssensors befindlichen jeweiligen Oberfläche der Anordnung zu dem Abstandssensor entsprechen. Um dabei gewisse Toleranzen zuzulassen sowie mögliche Messunsicherheiten zu berücksichtigen, ist den Messzuständen vorzugweise jeweils ein ganzer Wertebereich des Abstandes zugeordnet.

Somit repräsentiert ein jeweiliger Messzustand zwar einen definierten nominellen Abstand. Aber auch davon abweichende Abstände werden noch dem Messzustand zugeordnet, wenn sie innerhalb des jeweiligen Wertebereichs liegen. Der nominelle Abstand bildet dabei vorzugsweise jeweils das Zentrum des Wertebereichs. Der Wertebereich kann aber auch asymmetrisch um den nominellen Abstand verteilt sein, z.B. um asymmetrische Toleranzen bzw. Messunsicherheiten abzubilden. Insbesondere können sich auch verschiedenen Messzuständen zugeordnete Wertebereiche hinsichtlich ihrer jeweiligen Größe und/oder der jeweiligen Lage des nominellen Abstands innerhalb des Wertebereichs unterscheiden. Um eine eindeutige Zuordnung eines jeweiligen Abstandswertes zu einem Messzustand zu gewährleisten, sind die Wertebereiche vorzugweise disjunkt. Beispielsweise können sieben oder acht verschiedene Messzustände und jeweilige zugeordnete Wertebereiche vorgesehen sein.

Unter "Erkennung des Profils" ist hier folglich keine exakte Bestimmung eines gegebenenfalls unbekannten Profils der jeweiligen den Detektionsbereich des Abstandssensors durchlaufenden Anordnung zu verstehen. Vielmehr handelt es sich bei dem Erkennen des Profils gemäß der Erfindung insbesondere lediglich um eine Überprüfung, ob das Profil einer jeweiligen Anordnung mit einem zu erkennenden Profil, d.h. einem vorgegebenen Referenzprofil, zumindest im Wesentlichen übereinstimmt.

Diese Übereinstimmung kann dabei auf wesentliche Merkmale des Profils und des Referenzprofils beschränkt sein. Insbesondere erfolgt die Erkennung eines Profils, also die Überprüfung auf Übereinstimmung des Profils mit einem Referenzprofil, mit einer eingeschränkten Genauigkeit, was die mittels des Abstandssensors ermittelten Abstände betrifft. Das liegt nicht nur an der inhärenten Messungenauigkeit des Abstandssensors, sondern insbesondere daran, dass alle Abstände eines jeweiligen Wertebereichs wie vorstehend erläutert auf einen einzigen Messzustand reduziert werden. Insofern wird die Ortsauflösung der Profilerkennung in Abstandsrichtung gezielt auf eine endliche Anzahl zulässiger Abstände (die nominellen Abstände der vorgegebenen Wertebereiche) eingeschränkt, was wesentlich zur Reduzierung des Rechenaufwands beiträgt. Außerdem kann zur weiteren Vereinfachung bei der Profilerkennung auch vernachlässigt werden, wie lange ein jeweiliger (nomineller) Abstand vorliegt, also insbesondere wie lange eine jeweilige Stufe in dem Profil ist. Ein Profil wird bei dem erfindungsgemäßen Verfahren jedenfalls dann und insbesondere genau dann als mit dem Referenzprofil als übereinstimmend angesehen, wenn nach einer Reduzierung der über das Profil ermittelten Abstände auf eine bestimmte Anzahl nomineller Abstände eine Abfolge der nominellen Abstände mit einer Abfolge der entsprechenden Werte des Referenzprofils identisch ist.

Die Wertebereiche können dem endlichen Automaten bzw. dem Abstandssensor fest vorgegeben sein. Vorzugweise besteht jedoch die Möglichkeit, die Wertebereiche zumindest in einem gewissen Rahmen frei zu definieren. Die Wertebereiche können beispielsweise durch Eingeben von Zahlenwerten (nomineller Wert und/oder Randwerte des Wertebereichs) vorgebbar sein oder auch einlernbar sein, ohne dass konkrete Zahlenwerte bekannt sein müssten, z.B. indem ein Objekt in einem nominellem Abstand und/oder einem Randabstand des einzulernenden Bereichs angeordnet wird und eine Taste an dem Abstandssensor gedrückt wird. Werden zu einem nominellen Wert keine Randwerte vorgegeben, kann der jeweilige Wertebereich eine Standardbreite aufweisen.

Aus dem Ruhezustand geht der endliche Automat in Reaktion auf ein Aktivierungsereignis in einen Messzustand über. Dieses Aktivierungsereignis kann beispielsweise das Empfangen eines extern erzeugten Aktivierungssignals sein; das Aktivierungsereignis kann aber auch durch das System selbst, also insbesondere durch den Abstandssensor selbst, festgestellt werden, beispielsweise durch eine erfasste Abstandsänderung. Diese Varianten werden weiter unten noch näher erläutert.

Wenn sich der endliche Automat in einem Messzustand befindet, geht der endliche Automat aus dem Messzustand in einen anderen Messzustand über, wenn der Abstandssensor einen Abstand ermittelt, der innerhalb des dem anderen Messzustand zugeordneten Wertebereichs liegt. Auf diese Weise ist der von dem endlichen Automaten jeweils eingenommene Messzustand mit dem von dem Abstandssensor jeweils ermittelten Abstand verknüpft. Wenn sich der jeweils ermittelte Abstand so ändert, dass er in einen Wertebereich fällt, der einem anderen als dem jeweils gerade eingenommenen Messzustand entspricht, führt diese Änderung zu einer entsprechenden Änderungen des Messzustands. Dieser Zusammenhang gewährleistet, dass die Abfolge der Messzustände die Abfolge von Abständen entlang des Profils zumindest näherungsweise, aber für die Profilerkennung hinreichend genau widerspiegelt. Die Näherung kann sich insbesondere aus der vorstehend erläuterten Reduzierung der räumlichen Auflösung ergeben, die der Erkennung des Profils, d.h. der Überprüfung auf Übereinstimmung des Profils mit dem zu erkennenden Profil (Referenzprofil), nicht entgegensteht.

Vorteilhafterweise wird dabei die Abfolge der Messzustände erfasst, insbesondere aufgezeichnet. Der endliche Automat protokolliert sozusagen, in welcher Reihenfolge welcher Messzustand eingenommen wurde. Das Speichern der Abfolge der Messzustände ersetzt dabei ein Speichern der Abfolge der ermittelten Abstände, was zu einer wesentlichen Datenreduktion führen kann, da ein Messzustand jeweils mehrere Abstandswerte, nämlich alle Abstandswerte des ihm zugeordneten Wertebereichs, zusammenfasst.

Die Abstandsabfolge nicht direkt festzuhalten, sondern stattdessen lediglich die Abfolge definierter Messzustände, die jeweils einem bestimmten nominellen Abstand entsprechen, ist insbesondere dann nützlich, wenn das zu erkennende Profil gestuft ist, also Bereiche konstanter Erstreckung in Erstreckungsrichtung (z.B. konstanter Höhe) mit im Wesentlichen sprungartigen Übergängen zwischen diesen Bereichen aufweist. Die räumliche Auflösung der Abstandsermittlung kann dann vorteilhafterweise ohne Einschränkung der für die Profilerkennung erforderlichen Genauigkeit von der vollen Messauflösung des Abstandssensors auf die Zahl der in dem zu erkennenden Profil enthaltenen Stufen unterschiedlicher Höhe reduziert werden.

Auch die zeitliche Auflösung kann dabei auf ein Minimum reduziert werden. Denn der Abstandssensor erfasst in der Regel einzelne Abstandwerte gemäß einer vorgegebenen oder vorgebbaren Taktung (z.B. in regelmäßigen Intervallen) unabhängig davon, ob sich der Abstand wesentlich (insbesondere von einer Stufe zu einer anderen) verändert hat. Durch das Erfassen der Abfolge von Messzuständen wird dagegen für jede Stufe lediglich ein Wert (nämlich der entsprechende Messzustand) festgehalten. Daher ist das Verfahren insbesondere dann geeignet, wenn es für die Profilerkennung nicht auf die Länge einer jeweiligen Stufe, sondern zumindest im Wesentlichen ausschließlich auf die zeitliche Abfolge der Stufen unterschiedlicher Höhe ankommt. Insofern kann für die Überprüfung auf eine Übereinstimmung eines Profils mit einem Referenzprofil auch die Dauer eines jeweiligen Messzustands, die einer Länge einer (aufgrund der reduzierten räumlichen Auflösung) zumindest angenäherten Stufe entspricht, vernachlässigt werden, so dass auch dann eine Übereinstimmung vorliegen kann, wenn sich die Profile hinsichtlich einer solchen Dauer bzw. Länge unterscheiden.

In Reaktion auf ein Deaktivierungsereignis geht der endliche Automat aus einem Messzustand in den Auswertezustand über. Bei diesem (letzten) Messzustand (der Abfolge von Messzuständen) kann es sich grundsätzlich um einen beliebigen der Messzustände handeln. Je nachdem in welchem Messzustand sich der endliche Automat befindet, wenn das Deaktivierungsereignis eintritt, geht der endliche Automat aus diesem Messzustand in den Auswertezustand über. Dabei kann das Deaktivierungsereignis wie das genannte Aktivierungsereignis dem Eintreffen eines entsprechenden externen Signals (Deaktivierungssignals) entsprechen oder aber von dem Abstandssensor autonom festgestellt werden, wie weiter unten noch erläutert wird.

Im Auswertezustand wird in Abhängigkeit von einem Vergleich der erfassten Abfolge mit einer dem zu erkennenden Profil entsprechenden Referenzabfolge festgestellt, ob im erfindungsgemäßen Sinne eine Profilübereinstimmung oder eine Profilabweichung vorliegt. Als Ergebnis der Profilerkennung kann also zumindest festgestellt werden, dass entweder das erfasste Profil der Anordnung dem zu erwartenden Profil zumindest im Wesentlichen, d.h. im Rahmen der vorstehend erläuterten und insbesondere zur Verringerung des Rechenaufwandes vorgesehenen Ungenauigkeiten, entspricht (Profilübereinstimmung) oder dass dies nicht der Fall ist (Profilabweichung). Für diese Feststellung wird im Auswertezustand an Daten, die über die Anordnung erfasst wurden, vorzugweise lediglich die erfasste Abfolge von Messzuständen benötigt.

Die Abfolge von Messzuständen weist im Normalfall nur wenige Einzelwerte auf, nämlich insbesondere so viele Einzelwerte, wie das zu erkennende Profil Stufen aufweist, und benötigt daher wenig Speicherplatz. Die Referenzabfolge, die dem zu erkennenden Profil entspricht, weist stets dieselbe konstante Anzahl an Einzelwerten auf. Der Vergleich der erfassten Abfolge mit der Referenzabfolge umfasst daher lediglich diese Anzahl an Einzelvergleichen, um zuverlässig feststellen zu können, ob eine Profilübereinstimmung vorliegt. Die Auswertung erfordert somit einen vergleichsweise geringen Rechenaufwand.

Die Referenzabfolge kann dem endlichen Automaten, insbesondere dem Abstandssensor fest vorgegeben sein. Vorzugsweise ist es aber möglich, die Referenzabfolge variabel vorzugeben, d.h. entweder eine Referenzabfolge aus einer bestimmten Menge von Referenzabfolgen auszuwählen oder eine Referenzabfolge frei zu definieren.

Als zu erkennendes Profil muss nicht zwangsläufig lediglich ein Referenzprofil vorgesehen sein. Es können auch mehrere Referenzprofile in Form jeweiliger Referenzabfolgen vorgegeben oder vorgebbar sein. In diesem Fall erfolgt der Vergleich der erfassten Abfolge von Messzuständen vorzugsweise mit allen Referenzabfolgen oder zumindest so lange, bis eine Übereinstimmung mit einer der Referenzabfolgen festgestellt wird oder aber festgestellt wird, dass mit keiner der Referenzabfolgen eine Übereinstimmung besteht, also insgesamt eine Profilabweichung vorliegt.

Nach dem Feststellen im Auswertezustand, ob eine Profilübereinstimmung oder eine Profilabweichung vorliegt, kann der endliche Automat wieder in den Ruhezustand übergehen. Der endliche Automat ist dann also bereit, nach Auftreten eines weiteren Aktivierungsereignisses für eine weitere Profilerkennung erneut verschiedene Messzustände nacheinander einzunehmen. So können mehrere aufeinanderfolgende Anordnungen, die den Detektionsbereich des Abstandssensors nacheinander durchlaufen, auf ihr jeweiliges Profil hin überwacht werden.

Gemäß einer Ausführungsform stellt einer der Messzustände einen Grundzustand dar, wobei der endliche Automat aus dem Ruhezustand in Reaktion auf das Aktivierungsereignis in den Grundzustand übergeht. Bei dieser Ausführungsform ist insbesondere ein Übergang aus dem Ruhezustand in einen anderen der Messzustände ausgeschlossen, so dass die Abfolge von Messzuständen stets mit dem Grundzustand beginnt. Diesem Grundzustand ist wie den anderen Messzuständen ein Wertebereich zugeordnet. Eine solche Ausführungsform ist daher insbesondere dann vorteilhaft, wenn davon auszugehen ist, dass zu Beginn einer Profilerkennung stets derselbe Abstand, nämlich ein dem Grundzustand entsprechender Abstand, vorliegt.

Beispielsweise wenn die Anordnung einen Träger und auf dem Träger angeordnete Objekte unterschiedlicher Höhe umfasst, deren korrekte Reihenfolge auf dem Träger anhand der Profilerkennung überwacht werden soll, kann der Grundzustand dem Abstand einer Oberfläche des Trägers zum Abstandssensor entsprechen. Die Profilerkennung kann dann insbesondere stets damit beginnen, dass sich zunächst ein von Objekten freier Rand des Trägers in dem Detektionsbereich des Abstandssensors befindet. Von diesem Grundzustand aus können dann die einzelnen Objekte auf ihre Reihenfolge hin überprüft werden, indem der Träger so bewegt wird, dass die Objekte nacheinander den Detektionsbereich des Abstandssensors durchlaufen. Grundsätzlich kann der Träger dazu auch entlang einer von einer geraden Strecke abweichenden Spur bewegt werden. Die Bewegung erfolgt jedoch vorzugsweise gerade.

Bei dieser Ausführungsform kann ferner vorgesehen sein, dass aus einem Messzustand, der nicht der Grundzustand ist, kein unmittelbarer Übergang in einen anderen Messzustand, der nicht der Grundzustand ist, erfolgt. Der endliche Automat ist somit bei einer solchen Weiterbildung darauf eingeschränkt, innerhalb der Abfolge von Messzuständen zunächst vom Grundzustand in Abhängigkeit von einer Abstandsänderung in einen entsprechenden Messzustand überzugehen, aus diesem aber ausschließlich in den Grundzustand zurückkehren zu können. Vom Grundzustand aus kann der endliche Automat dann wieder in Abhängigkeit von einer weiteren Abstandsänderung in einen anderen Messzustand übergehen, aus dem er jedoch innerhalb der Abfolge von Messzuständen wiederum ausschließlich in den Grundzustand übergehen kann. Dies setzt sich so fort, bis die Abfolge von Messzuständen beendet wird, z.B. indem das Deaktivierungssignal den endlichen Automaten in den Auswertezustand versetzt.

Eine solche Ausführungsform kann je nach dem zu erkennenden Profil vorteilhaft sein und ist insbesondere dann zweckmäßig, wenn das Profil seinerseits Stufen verschiedener Höhe aufweist, wobei eine Höhe einer Grundhöhe entspricht, auf die von jeder sonstigen Stufe aus stets zurückgekehrt wird.

Gemäß einer weiteren Ausführungsform geht der endliche Automat aus dem Ruhezustand in einen Messzustand über, wenn der Abstandssensor einen Abstand ermittelt, der innerhalb des dem Messzustand zugeordneten Wertebereichs liegt. Bei einer solchen Ausführungsform entspricht somit das Aktivierungsereignis, infolge dessen der endliche Automat den Ruhezustand verlässt, dem Erreichen eines jeweiligen Wertebereichs, was durch Ermitteln des Abstands mittels des Abstandssensors festgestellt werden kann. Das Aktivierungsereignis ist somit nicht von einer externen Vorrichtung als einer Art Trigger abhängig, sondern die Profilerkennung kann durch den Abstandssensor autonom ausgelöst werden.

Beispielsweise kann sich im Ruhezustand zunächst eine Fördervorrichtung (z.B. ein Förderband) im Detektionsbereich des Abstandssensors befinden, mit der mehrere zu überwachende Anordnungen befördert werden. Wenn eine dieser Anordnungen in den Detektionsbereich eindringt, ändert sich der mittels des Abstandssensors gemessene Abstand sprunghaft von der Höhe der Fördervorrichtung auf die Höhe einer ersten Oberfläche der Anordnung, so dass der Abstand in einen Wertebereich fällt, der einem dieser Höhe entsprechenden Messzustand zugeordnet ist. Diese Änderung stellt dann das Aktivierungsereignis dar, welches dazu führt, dass der endliche Automat den Ruhezustand verlässt, einen Messzustand einnimmt und beginnt, eine Abfolge von Messzuständen aufzuzeichnen.

Bei dieser Ausführungsform kann außerdem vorgesehen sein, dass der endliche Automat aus dem Ruhezustand grundsätzlich in jeden der Messzustände übergehen kann, wobei dann der Messzustand, in den der endliche Automat aus dem Ruhezutand übergeht, von dem ermittelten, die Aktivierung auslösenden Abstand abhängt. Aus dem Ruhezustand kann aber auch ausschließlich eine Teilmenge der Messzustände, insbesondere auch ausschließlich ein einziger Messzustand, z.B. ein Grundzustand wie vorstehend erläutert, zugänglich sein, so dass der Ruhezustand nur dann verlassen wird, wenn von dem Abstandssensor ein als Beginn der Profilerkennung geeigneter Abstand, der dem Grundzustand entspricht, ermittelt wird.

Gemäß einer weiteren Ausführungsform ist dem Ruhezustand ein Wertebereich zugeordnet, wobei der endliche Automat aus einem Messzustand in den Auswertezustand übergeht, wenn der Abstandssensor einen Abstand ermittelt, der innerhalb des dem Ruhezustand zugeordneten Wertebereichs liegt. Bei einer solchen Ausführungsform entspricht somit das Deaktivierungsereignis, infolge dessen der endliche Automat den Auswertezustand einnimmt, dem Erreichen eines bestimmten, dem Ruhezustand zugeordneten Wertebereichs, was durch Ermitteln des Abstands mittels des Abstandssensors selbst festgestellt werden kann. Das Deaktivierungsereignis ist somit nicht von einer externen Vorrichtung als einer Art Trigger abhängig, sondern die Profilerkennung kann durch den Abstandssensor autonom beendet werden.

Beispielsweise kann dem Ruhezustand ein Wertebereich zugeordnet sein, der dem Abstand einer Fördervorrichtung (z.B. eines Förderbandes) von dem Abstandssensor entspricht, wobei die Fördervorrichtung Anordnungen, deren Profil überwacht werden soll, durch den Detektionsbereich des Abstandssensors befördert. Abstände innerhalb des dem Ruhezustand zugeordneten Wertebereichs werden somit gerade dann erfasst, wenn sich keine Anordnung innerhalb des Detektionsbereichs des Abstandssensors befindet. Daher kann anhand eines solchen Abstandes erkannt werden, wenn eine bis dahin zumindest teilweise in dem Detektionsbereich befindliche und zur Profilerkennung erfasste Anordnung den Detektionsbereich verlässt, so dass dann das Erfassen der Abfolge von Messzuständen beendet werden kann und der endlichen Automat in den Auswertezustand übergehen kann.

Gemäß einer weiteren Ausführungsform ist eine Auslösevorrichtung vorgesehen, welche in Reaktion auf ein Eindringen der Anordnung in den Detektionsbereich des Abstandssensors ein Aktivierungssignal erzeugt und an den Abstandssensor ausgibt und/oder in Reaktion auf ein Austreten der Anordnung aus dem Detektionsbereich des Abstandssensors ein Deaktivierungssignal erzeugt und an den Abstandssensor ausgibt. Bei dieser Ausführungsform entspricht das Aktivierungsereignis, infolge dessen der endliche Automat, den Ruhezustand verlässt, bzw. das Deaktivierungsereignis, infolge dessen der endliche Automat den Auswertezustand einnimmt, dem Eintreffen des Aktivierungssignals bzw. des Deaktivierungssignals. Die Auslösevorrichtung fungiert insofern als externer Trigger.

Durch einen solchen Trigger kann die Zuverlässigkeit der Festlegung, wann eine Profilerkennung für eine jeweilige den Detektionsbereich durchlaufende Anordnung begonnen bzw. beendet werden soll, erhöht werden. Dabei kann die Auslösevorrichtung zusätzlich zu der vorstehend beschriebenen Möglichkeit einer autonomen Feststellung eines Aktivierungsereignisses bzw. Deaktivierungsereignisses oder alternativ dazu vorgesehen sein.

Bei der Auslösevorrichtung kann es sich beispielsweise um einen weiteren Abstandssensor handeln, der insbesondere als Näherungsschalter ausgebildet ist, um das Eindringen der Anordnung in den Detektionsbereich bzw. das Austreten der Anordnung aus dem Detektionsbereich zu erfassen. Insofern muss die Auslösevorrichtung lediglich zwei Fälle - eine jeweilige Anordnung befindet sich im Detektionsbereich oder nicht -unterscheiden können und kann daher vergleichsweise einfach ausgebildet sein. Insbesondere braucht die Auslösevorrichtung nicht dazu ausgebildet zu sein, konkrete Abstandswerte zu erfassen. Eine einfache Detektion, ob sich die Anordnung im Detektionsbereich befindet oder nicht, ist beispielsweise mittels eines mechanischen Positionsschalters, eines Lichttasters oder einer Lichtschranke möglich.

Gemäß einer weiteren Ausführungsform weist der endliche Automat einen Ausgabezustand auf, in den der endliche Automat nach dem Feststellen der Profilübereinstimmung oder der Profilabweichung übergeht und in dem der Abstandssensor in Abhängigkeit von der Profilübereinstimmung oder der Profilabweichung ein Ausgabesignal ausgibt. Der Ausgabezustand schließt vorzugsweise zwangsläufig an den Auswertezustand an und dient insbesondere dazu, das Ergebnis der Auswertung auszugeben. Die Ausgabe kann dabei über einen Signalausgang des Abstandssensors erfolgen und beispielsweise einen Strom- oder Spannungspuls definierter Dauer umfassen. Unterschiedliche Signale können sich insbesondere hinsichtlich der Intensität, der Dauer, der Anzahl oder Frequenz von Pulsen und/oder eines Pulsmusters unterscheiden und analog oder digital sein. Die Ausgabe kann insbesondere auch über eine Kommunikationsschnittstelle, wie beispielsweise gemäß der Norm IEC 61131, vorzugsweise gemäß IEC 61131-9 (IO-Link), erfolgen.

Der Ausgabezustand kann für eine gewisse vorgegebene Dauer eingenommen werden, nach deren Ablauf der endliche Automat vorzugsweise wieder in den Ruhezustand übergeht, um für eine weitere Profilerkennung bereitzustehen. Dabei kann die Dauer des Ausgabezustands der Dauer eines jeweiligen vom Ergebnis der Profilerkennung abhängigen Ausgabesignals entsprechen, so dass mit Beendigung des Ausgebens des Ausgabesignals auch der Ausgabezustand endet. Die Dauer des Ausgabezustands kann somit je nach erkanntem oder nicht erkanntem Profil variieren.

Sind mehrere Referenzabfolgen für eine Überprüfung auf eine Übereinstimmung des Profils mit zumindest einem von mehreren Referenzprofilen vorgesehen, dann kann durch das Ausgabesignal im Falle einer Profilübereinstimmung vorzugweise auch signalisiert werden, mit welchem der Referenzprofile die Profilübereinstimmung vorliegt.

Gemäß einer bevorzugten Weiterbildung wird im Falle einer Profilübereinstimmung kein Ausgabesignal ausgegeben. Eine Profilübereinstimmung wird bei dieser Ausführungsform also nicht eigens signalisiert. Vielmehr ist gerade das Fehlen eines Ausgabesignals ein Hinweis darauf, dass bei der Abfolge, die den Detektionsbereich des Abstandssensors zuvor durchlaufen hat, eine Profilübereinstimmung vorgelegen hat. Wenn dies dem zu erwartenden Normalzustand entspricht, kann durch einen Verzicht auf ein eine Profilübereinstimmung anzeigendes Ausgabesignal der Umfang der Systemkommunikation reduziert werden. Liegt dagegen eine Profilabweichung vor, kann dies einen Fehler darstellen, auf den in geeigneter Weise reagiert werden muss. Daher wird vorzugsweise zumindest dann, wenn eine Profilabweichung vorliegt, ein Ausgabesignal erzeugt und ausgegeben.

Gemäß einer weiteren Ausführungsform wird zumindest zwischen einer Profilumkehr oder einem Fehlprofil als möglichen Profilabweichungen unterschieden. Es lassen sich folglich als Ergebnis der Profilerkennung zumindest drei verschiedene Zustände unterscheiden: Bei einer Profilübereinstimmung stimmt das Profil der Anordnung mit dem zu erkennenden Profil überein, so dass die erfasste Abfolge der Messzustände mit der Referenzabfolge identisch ist; bei einer Profilumkehr ist die Abfolge der Messzustände gegenüber der Referenzabfolge gerade umgekehrt, was darauf hindeutet, dass zwar eine korrekte Anordnung den Detektionsbereich durchlaufen hat, jedoch in falscher Ausrichtung, nämlich insbesondere gerade um 180° bezüglich der Bewegungsrichtung gedreht; ein Fehlprofil schließlich wird festgestellt, wenn keine der verschiedenen Arten einer (Teil-)Übereinstimmung vorliegt, die Anordnung also ein insgesamt falsches Profil aufweist. Grundsätzlich können die möglichen Profilabweichungen auch noch weiter unterschieden werden, um etwa weitere Arten einer Teilübereinstimmung zu erfassen.

Insbesondere können die unterschiedlichen Profilabweichungen durch unterschiedliche Ausgabesignale nach außen signalisiert werden. Zur Unterscheidung kann beispielsweise ein eine Profilumkehr anzeigendes Ausgabesignal an einem ersten Ausgabeanschluss (z.B. Pin) des Abstandssensors und ein ein Fehlprofil anzeigendes Ausgabesignal an einem zweiten Ausgabeanschluss des Abstandssensor ausgegeben werden, so dass die Ausgabesignale anhand des jeweiligen Ausgabeanschlusses unterscheidbar sein und daher ansonsten identisch sein können.

Gemäß einer Ausführungsform ist der Abstandssensor dazu ausgebildet, fortlaufend einzelne Abstandswerte zu bestimmen, wobei der Abstand der jeweiligen Oberfläche zu dem Abstandssensor lediglich dann als in einem Wertebereich liegend angenommen wird, wenn eine vorgegebene Anzahl, insbesondere unmittelbar aufeinanderfolgender, einzelner Abstandswerte innerhalb des Wertebereichs liegt. Mit anderen Worten ist beispielsweise der Übergang aus einem Messzustand in einen anderen Messzustand nicht davon abhängig, ob ein einzelner von dem Abstandssensor ermittelter Abstandswert innerhalb des dem anderen Messzustand zugeordneten Wertebereichs liegt, sondern davon, ob eine ganze Folge einzelner Abstandswerte in dem Wertebereich liegt. Insofern durchlaufen die Abstandswerte eine sogenannte Mehrbitverarbeitung, deren Mehrbittiefe der vorgegebenen Anzahl einzelner Abstandswerte entspricht.

Durch eine solche Mehrbitverarbeitung kann verhindert werden, dass ein einzelner Abstandswert, der möglicherweise zufällig, z.B. aufgrund von Rauschen, einen von dem realen Abstand abweichenden Wert aufweist, zu einer Zustandsänderung führt. Dabei wird davon ausgegangen, dass eine reale Änderung des Abstands zu zumindest der vorgegebenen Anzahl von aufeinanderfolgenden Abstandswerten führt, die dem tatsächlichen neuen Abstand zumindest im Wesentlichen entsprechen. Je größer diese Anzahl gewählt wird, desto sicherer können bloß zufällige Abweichungen, die oftmals lediglich einen einzelnen Abstandswert andauern, sozusagen ausgeblendet werden. Daher kann beispielsweise eine Anzahl von fünf Abstandswerten ausreichen. Die Mehrbitverarbeitung hat in diesem Beispiel dann eine Mehrbittiefe von fünf.

Gemäß einer weiteren Ausführungsform weist der endliche Automat einen Abbruchzustand auf, wobei der endliche Automat aus einem Messzustand in den Abbruchzustand übergeht, wenn ein Fehlerkriterium erfüllt ist. Der Abbruchzustand kann insofern als eine Art Auffangzustand angesehen werden, der für verschiedene Fälle vorgesehen ist, in denen davon auszugehen ist, dass ein Fehler aufgetreten ist. In einem solchen Fehler-Fall kann es sein, dass das Erfassen der Abfolge der Messzustände nicht fortgesetzt zu werden braucht, da davon auszugehen ist, dass die Messzustände aufgrund des jeweiligen Fehlers ohnehin nicht die Wirklichkeit widerspiegeln. Es kann auch sein, dass das Erfassen der Abfolge von Messzuständen ohnehin gar nicht fortgesetzt werden kann, weil Abstände ermittelt werden, die nicht zuordenbar sind, wie nachfolgend näher erläutert wird.

Der Abbruchzustand kann zu der vollständigen Beendigung des Verfahrens führen, so dass anschließend keine weiteren Anordnungen auf ihr Profil hin überprüft werden können. Vorzugsweise geht der endliche Automat aus dem Abbruchzustand jedoch zumindest letztlich wieder in den Ruhezustand über. Dies kann grundsätzlich direkt erfolgen, erfolgt vorzugsweise aber über den Auswertezustand und/oder den vorstehend beschriebenen Ausgabezustand. Auf diese Weise ist es möglich, dass die bis zum Abbruch aufgezeichnete Abfolge der Messzustände noch ausgewertet wird bzw. dass ein Ausgabesignal ausgegeben wird, welches den erfolgten Abbruch auf spezifische Weise, z.B. als Fehlersignal, signalisiert.

Als Fehlerkriterium kommen z.B. verschiedene Defekte des Abstandssensors in Frage, beispielsweise wenn festgestellt wird, dass der Abstandssensor überhitzt ist oder ein Bauteil des Abstandssensors, z.B. eine Lichtquelle, ausgefallen ist. Vorzugsweise ist aber zumindest auch ein Fehlerkriterium vorgesehen, das auf Irregularitäten beim Ermitteln der Abstände bezogen ist.

So ist der Abstandssensor gemäß einer Weiterbildung beispielsweise dazu ausgebildet, fortlaufend einzelne Abstandswerte zu bestimmen, wobei das Fehlerkriterium zumindest dann erfüllt ist, wenn eine vorgegebene Anzahl einzelner Abstandswerte außerhalb eines jeden Wertebereichs liegt, der entweder dem aktuellen Messzustand oder einem von dem aktuellen Messzustand aus unmittelbar erreichbaren Messzustand entspricht. In einem solchen Fall können die ermittelten Abstände keinem der Messzustände zugeordnet werden. Um die Abstände nicht willkürlich einem der Messzustände zuzuordnen, wird dann die Abfolge der Messzustände abgebrochen und der Abbruchzustand eingenommen.

Dabei reicht vorzugsweise ein einzelner Abstandswert, der keinem der Messzustände zugeordnet werden kann, nicht aus, um das Fehlerkriterium zu erfüllen. Sondern es erfolgt - ähnlich wie vorstehend für die Entscheidung, ob aus einem Messzustand in einen anderen Messzustand übergegangen wird, beschrieben - eine Mehrbitverarbeitung. Demnach ist das Fehlerkriterium erst erfüllt, wenn mehrere, insbesondere aufeinanderfolgende, einzelne Abstandswerte keinem Messzustand zugeordnet werden können. Durch eine solche Mehrbitverarbeitung kann vermieden werden, dass ein einzelner, möglicherweise zufälliger, z.B. durch Rauschen bedingter, nicht zuordenbarer Abstandswert einen Abbruch der Messzustandsabfolge auslöst.

Gemäß einer Ausführungsform ist der Abstandssensor ein Lichttaster, der dazu ausgebildet ist, ein Lichtsignal auszusenden, eine von der jeweiligen Oberfläche erzeugte Reflexion des Lichtsignals zu empfangen, und aus der empfangenen Reflexion einen Abstand der jeweiligen Oberfläche zum Lichttaster zu ermitteln. Eine derartige optische Abstandsmessung hat den Vorteil, in einem weiten Skalenbereich zuverlässig anwendbar zu sein. Durch Aussenden eines Lichtsignals in einem nicht sichtbaren Spektralbereich (z.B. Infrarot) kann vermieden werden, dass die Abstandsmessung störend wahrgenommen wird. Ein sichtbares Lichtsignal hat den Vorteil, dass der Detektionsbereich, insbesondere der konkrete Ort der Abstandsmessung auf der jeweiligen Oberfläche, deutlich erkannt werden kann, was insbesondere für die Montage und Justierung des Abstandssensors nützlich sein kann.

Gemäß einer Weiterbildung ist der Lichttaster dazu ausgebildet, den Abstand der jeweiligen Oberfläche zum Lichttaster aus einer Laufzeit eines pulsförmigen Lichtsignals zur jeweiligen Oberfläche und zurück oder aus der Phasenverschiebung eines von dem Lichttaster ausgesandten modulierten Lichtsignales zu dem an der jeweiligen Oberfläche reflektierten Lichtsignal zu ermitteln. Der Lichttaster kann also insbesondere nach dem Time-of-Flight-Prinzip (ToF) funktionieren.

Gemäß einer hierzu alternativen Weiterbildung ist der Lichttaster dazu ausgebildet, den Abstand der jeweiligen Oberfläche zum Lichttaster anhand einer Triangulation zu ermitteln. Die Abstandsmessung mittels Triangulation kann von Vorteil sein, wenn je nach Beschaffenheit der jeweiligen Oberfläche schwierige Reflexionsbedingungen vorliegen. Zudem kann durch Triangulation ein Hintergrund, weleher die Abstandsmessung beeinflussen kann, vergleichsweise einfach ausgeblendet werden.

Der Abstandssensor kann jedoch auch nach anderen Abstandsmessprinzipien funktionieren als mittels eines ausgesandten Lichtsignals. Beispielsweise kann der Abstandssensor alternativ zu einer Ausbildung des Abstandssensors als Lichttaster gemäß einer weiteren Ausführungsform als induktiver oder kapazitiver Abstandssensor ausgebildet sein.

Die der Erfindung zugrunde liegende Aufgabe wird ferner gelöst durch einen Abstandssensor, der dazu ausgebildet ist, ein Verfahren wie vorstehend beschrieben, insbesondere gemäß einer der beschriebenen Ausführungsformen, ausführen. Bei den Abstandssensor handelt es sich vorzugsweise um einen Abstandssensor, der grundsätzlich auch ohne das erfindungsgemäße Verfahren dazu ausgebildet ist, einen jeweiligen Abstand als konkrete Abstandswerte zu ermitteln, um die Abstandswerte beispielsweise über eine Schnittstelle (z.B. IO-Link) auszugeben. Die Abstandswerte können dann zur Durchführung des Verfahrens direkt intern herangezogen werden.

Dazu kann der Abstandssensor beispielsweise eine Computervorrichtung, wie z.B. einen Mikrocontroller oder ein eingebettetes System, aufweisen. Das Verfahren ist dann vorzugsweise softwareseitig als Computerprogramm implementiert. Insbesondere können gewöhnliche Abstandssensoren auf diese Weise mit der erfindungsgemäßen Funktionalität nachrüstbar sein.

Daher ist die Erfindung auch auf ein Computerprogramm mit Programmcode-Mitteln bezogen, die derart eingerichtet sind, dass ein Verfahren wie vorstehend beschrieben, insbesondere gemäß einer der beschriebenen Ausführungsformen, durchgeführt wird, wenn das Computerprogramm auf einer Computervorrichtung ausgeführt wird.

Ferner ist die Erfindung auch auf ein Computerprogrammprodukt mit Programmcode-Mitteln bezogen, die auf einem computerlesbaren Datenträger gespeichert sind und derart eingerichtet sind, dass ein Verfahren wie vorstehend beschrieben, insbesondere gemäß einer der beschriebenen Ausführungsformen, durchgeführt wird, wenn das Programmprodukt auf einer Computervorrichtung ausgeführt wird.

Die Erfindung wird nachfolgen lediglich beispielhaft unter Bezugnahme auf die Figuren näher erläutert.
- Fig. 1: zeigt in schematischer Darstellung eine Anordnung, die gemäß einer Ausführungsform des Verfahrens den Detektionsbereich eines Abstandssensors durchläuft.
- Fig. 2: zeigt in schematischer Darstellung eine weitere Anordnung mit gekennzeichneten Wertebereichen, die jeweiligen Messzuständen entsprechen, sowie mit einer zeitlichen Abfolge erzeugter Signale.
- Fig. 3: zeigt ein Diagramm des endlichen Automaten gemäß einer Ausführungsform des Verfahrens.

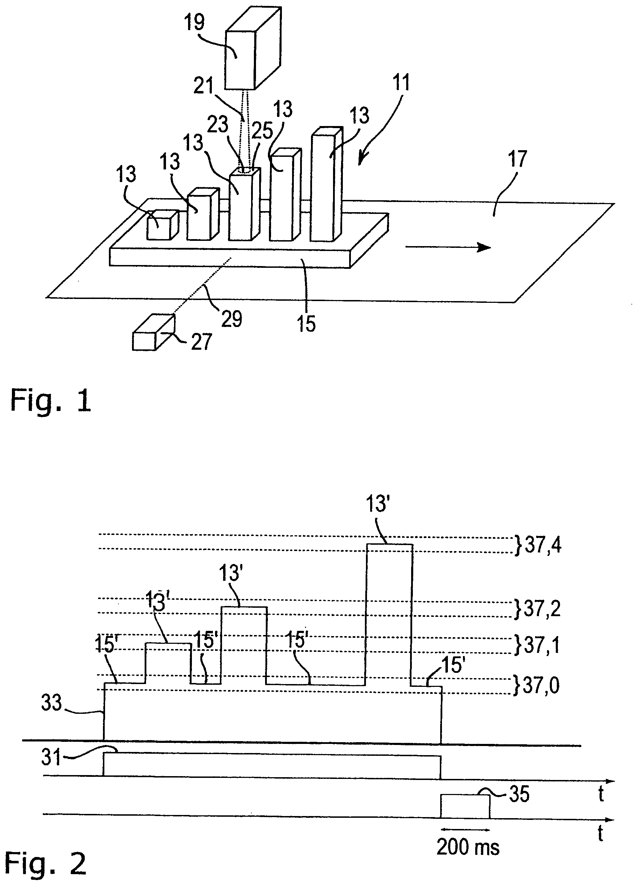

In Fig. 1 ist eine Anordnung 11 dargestellt, die fünf Objekte 13 verschiedener Höhe auf einem gemeinsamen Träger 15 umfasst. Die Objekte 13 sind beabstandet zueinander in einer Reihe angeordnet, die parallel zu einer horizontalen Förderrichtung (vgl. Pfeil) ist ausgerichtet ist, in die die Anordnung 11 auf einem Förderband 17 befördert wird. Dabei werden mittels des Förderbandes 17 aufeinanderfolgend mehrere grundsätzlich gleichartige Anordnungen 11 befördert, von denen lediglich eine gezeigt ist.

Oberhalb des Förderbandes 17 ist ein Abstandssensor 19 vorgesehen, dessen Detektionsbereich 21 vertikal nach unten weist (vgl. unterbrochen umrandeter Bereich). Während die Anordnung 11 in Förderrichtung befördert wird, durchläuft sie den Detektionsbereich 21 des Abstandssensors 19, wobei sich jeweils eine jeweilige Oberfläche 23 in dem Detektionsbereich 21 befindet. Zu dem dargestellten Zeitpunkt handelt es sich bei der in dem Detektionsbereich des Abstandssensors befindlichen jeweiligen Oberfläche 23 um einen Teil einer Oberseite 25 des mittleren der fünf Objekte 13.

Als Profil kann von dem Abstandssensor 19 somit der Verlauf einer Höhe der Anordnung 11 in zu der Förderrichtung paralleler Richtung erfasst werden. Die Richtung, in die das Profil verläuft, ist dabei zu der Förderrichtung gerade entgegengesetzt, da eine in Förderrichtung ganz vorne befindliche jeweilige Oberfläche 23 als erstes und eine in Förderrichtung ganz hinten befindliche jeweilige Oberfläche 23 als letztes den Detektionsbereich 21 des Abstandssensors 19 durchläuft.

Der Abstandssensor 19 ist bei der dargestellten Ausführungsform als Lichttaster ausgebildet, der aus einer Laufzeit eines von dem Lichttaster 19 ausgesandten, von der jeweiligen Oberfläche 23 reflektierten und von dem Lichttaster 19 wieder empfangenen Lichtsignals einen Abstandswert über den Abstand der jeweiligen Oberfläche 23 zum Lichttaster 19 ermittelt. Dabei werden in regelmäßigen Intervallen fortlaufend neue Abstandswerte ermittelt.

Zusätzlich zu dem Abstandssensor 19 ist als Auslösevorrichtung 27 ein weiterer Lichttaster vorgesehen, dessen Detektionsstrahl 29 horizontal und senkrecht zur Förderrichtung verläuft. Die Auslösevorrichtung 27 kann lediglich zwei Zustände unterscheiden, nämlich ob sich eine jeweilige Anordnung 11 gerade in dem Detektionsbereich 21 des Abstandssensors 19 befindet oder nicht. Diese Zustände werden hier daran erkannt, ob der Detektionsstrahl 29 auf den Träger 15 einer jeweiligen Anordnung 11 trifft oder nicht. Während der Detektionsstrahl 29 der Auslösevorrichtung 27 auf den Träger 15 trifft, erzeugt die Auslösevorrichtung 27 ein Triggersignal 31, das sie an den Abstandssensor 19 ausgibt.

Ein beispielhaftes Triggersignal 31 ist in Fig. 2 gezeigt. Das Triggersignal 31 entspricht bezüglich seiner Dauer der Länge des Trägers 15. Die von dem Abstandssensor 19 ermittelten Abstandswerte sind über dem Triggersignal 31 als Abstandsverlaufskurve 33 dargestellt. Dabei sind die Abschnitte, die dem Träger 15 der Anordnung 11 entsprechen, mit dem Bezugszeichen 15' und die Abstandswerte, die einem Objekt 13 der Anordnung 11 entsprechen, mit dem Bezugszeichen 13' gekennzeichnet.

Die in Fig. 2 gezeigte Abstandsverlaufskurve 33 entspricht einer anderen Anordnung 11 als der in Fig. 1 gezeigten. Die Anordnung 11, an der die Abstandsverlaufskurve 33 gemessen wurde, weist auf einem Träger 15 lediglich drei Objekte 13 auf, die nicht gleichmäßig beabstandet sind. Vielmehr ist zwischen dem zweiten und dem dritten Objekt 13 (in Fig. 2: von links) eine Lücke, in der die Anordnung 11 bei regelmäßiger Reihung ein weiteres Objekt 13 hätte aufweisen können. Weist das zu erkennende Profil an dieser Stelle eigentlich ein weiteres Objekt 13 auf, so entspricht die in Fig. 2 gezeigte Abstandsverlaufskurve 33 einer Profilabweichung, insbesondere einem Fehlprofil.

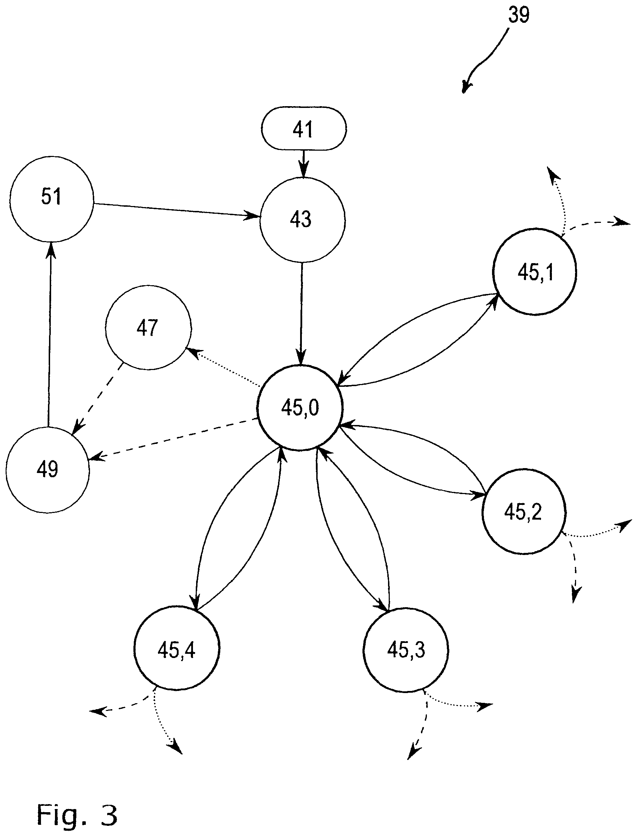

In Fig. 2 ganz unten ist ferner ein Ausgabesignal 35 gezeigt, welches der Abstandssensor 19 als Ergebnis der Profilerkennung ausgibt, wenn ein Fehlprofil festgestellt wurde. Die Ausgabe des Ausgabesignals 35 erfolgt nahezu unmittelbar im Anschluss an das Ende des Triggersignals 31. Eine Verzögerung ergibt sich lediglich aus der Zeit, welche für die Auswertung der erfassten Abfolge von Messzuständen benötigt wird, wie nachfolgend mit Bezug auf Fig. 3 erläutert wird. Das Ausgabesignal 35 hat eine Dauer von 200 ms und wird an einem spezifisch für die Signalisierung eines Fehlprofils vorgesehenen Pin (nicht dargestellt) des Abstandssensors 19 ausgegeben.

In Fig. 2 sind durch unterbrochene Linien die Randwerte (Maximalwert und Minimalwert) eines Grundwertebereichs 37.0, eines ersten Wertebereichs 37.1, eines zweiten Wertebereichs 37.2 und eines vierten Wertebereichs 37.4 des Abstands der jeweiligen Oberfläche 23 zu dem Abstandssensor 19 gekennzeichnet. Die Wertebereiche 37 sind so gewählt, dass mit ihnen die zu erwartenden Abstandswerte des zu erkennenden Profils, insbesondere Stufen des Profils, zuverlässig erfasst werden können. Die Breite der Wertebereiche 37 ist dabei an ein zu erwartendes Rauschen bei der Abstandsmessung mittels des Abstandssensors 19 angepasst und für alle Wertebereiche 37 identisch.

Der Abstandssensor 19 umfasst eine Computervorrichtung als ein eingebettetes System auf (nicht dargestellt), welche die ermittelten Abstandswerte erhält und ein Computerprogramm ausführt, mit dem eine Ausführungsform des erfindungsgemäßen Verfahrens auf dem Abstandssensor 19 ausgeführt wird. Dieses Verfahren ist als ein endlicher Automat 39 ausgebildet, dessen Schema in Fig. 3 dargestellt ist, dabei sind einzelne Zustände des endlichen Automaten 39 kreisförmig dargestellt. Mögliche Übergänge zwischen den Zuständen werden durch Pfeile illustriert.

Ausgehend von einem Einschaltzustand 41 nimmt der endliche Automat 39 infolge eines Starts des Computerprogramms zunächst einen Ruhezustand 43 ein, in dem die Profilerkennung sozusagen ruht, insbesondere wird dabei keine Abfolge von Zuständen aufgezeichnet. Ein Übergang aus dem Ruhezustand 43 in einen Grundzustand 45.0 des endlichen Automaten 39 wird durch ein Aktivierungsereignis ausgelöst, welches bei den in Fig. 1 und 2 dargestellten Ausführungsformen darin besteht, dass der Träger 15 einer jeweiligen Anordnung 11 von der Auslösevorrichtung 27 erfasst wird. Als Aktivierungssignal, welches der Abstandssensor 19 empfängt und infolge dessen er den Grundzustand 45.0 einnimmt, kann insofern der sprunghafte Anstieg des Triggersignals 31 (vgl. Fig. 2) angesehen werden.

Beginnend mit dem Grundzustand 45.0 wird eine Abfolge von Messzuständen 45, zu denen der Grundzustand 45.0 zählt, erfasst. Dazu wird bei jedem Übergang aus einem Messzustand 45 in einen anderen Messzustand 45, der jeweils neue Messzustand 45 in ein Speicherfeld geschrieben.

Ein solcher Übergang aus einem Messzustand 45 in einen anderen Messzustand 45 findet statt, wenn eine bestimmte Anzahl von Abstandsmesswerten in den Wertebereich 37 fällt, der dem anderen Messzustand 45 zugeordnet ist. Bei dem in Fig. 3 gezeigten Schema existieren als Messzustände 45 zusätzlich zu dem Grundzustand 45.0, ein erster Messzustand 45.1, ein zweiter Messzustand 45.2, ein dritter Messzustand 45.3 und ein vierter Messzustand 45.4. Dabei ist dem Grundzustand 45.0 der Grundwertebereich 37.0, dem ersten Messzustand 45.1 der erste Wertebereich 37.1, dem zweiten Messzustand 45.2 der zweite Wertebereich 37.2, dem dritten Messzustand 45.3 ein dritter Wertebereich 37.3 (in Fig. 2 nicht gezeigt) sowie dem vierten Messzustand 45.4 ein vierter Wertebereich 37.4 zugeordnet.

Wie das Schema in Fig. 3 verdeutlicht, ist bei der gezeigten Ausführungsform nicht aus jedem Messzustand 45 jeder andere Messzustand 45 erreichbar. Vielmehr können nur aus dem Grundzustand 45.0 alle anderen Messzustände 45.1, 45.2, 45.3, 45.4 erreicht werden. Aus den anderen Messzuständen 45.1., 45.2, 45.3, 45.4 ist dagegen als Messzustand 45 lediglich der Grundzustand 45.0 zugänglich. Auf diese Weise ist der endliche Automat speziell an eine Anordnung 11 angepasst, die mehrere zueinander beabstandete Objekte 13 auf einem Träger 15 umfasst, wie beispielhaft in Fig. 1 dargestellt.

Aus jedem der Messzustände 45 kann der endliche Automat 39 zudem einerseits in einen Abbruchzustand 47 und andererseits in einen Auswertezustand 49 übergehen. Diese Übergänge sind nur für den Grundzustand 45.0 als Pfeil bis zu dem jeweiligen Zustand 47 bzw. 49 illustriert. Der besseren Übersicht halber sind die entsprechenden Übergänge ausgehend von den übrigen Messzuständen 45.1, 45.2, 45.3, 45.4 lediglich durch verkürzte Pfeile angedeutet. Dabei werden die Übergänge in den Abbruchzustand 47 bzw. in den Auswertezustand 49 jeweils durch einen Pfeil mit punktierter bzw. unterbrochener Linie symbolisiert. In den Auswertezustand 49 kann der endliche Automat 39 zudem auch aus dem Abbruchzustand 47 übergehen.

In den Abbruchzustand 47 geht der endliche Automat 39 über (vgl. Pfeile mit punktierter Linie), wenn ein Fehlerkriterium erfüllt ist, was jedenfalls dann der Fall ist, wenn fünf aufeinanderfolgende Abstandswerte in keinen der den Messzuständen 45 zugeordneten Wertebereiche 37 fallen.

In den Auswertezustand 49 geht der endliche Automat 39 infolge eines Deaktivierungsereignisses über (vgl. Pfeile mit unterbrochener Linie). Bei den in Fig. 1 und 2 dargestellten Ausführungsformen umfasst das Deaktivierungsereignis, dass der Träger 15 der Anordnung 11 aus dem Detektionsstrahl 29 der Auslösevorrichtung 27 tritt. Dadurch endet das Triggersignal 31, was seinerseits als Deaktivierungssignal gewertet wird, anhand dessen der endliche Automat 39 sozusagen von dem Deaktivierungsereignis Kenntnis erlangt. Bei diesen Ausführungsformen wird die Auswertung der erfassten Abfolge von Messzuständen 45 somit dadurch ausgelöst, dass die Anordnung 11 den Detektionsbereich 21 des Abstandssensors 19 verlässt.

Zur Auswertung, ob eine Profilübereinstimmung, eine Profilumkehr oder ein Fehlprofil vorliegt, wird im Auswertezustand 49 die erfasste Abfolge von Messzuständen 45 mit einer Referenzabfolge verglichen. Wenn dieser Vergleich erfolgt ist, geht der endliche Automat 39 in einen Ausgabezustand 51 über, in dem der Abstandssensor 19 im Falle einer Profilabweichung ein Ausgabesignal 35 (vgl. Fig. 2) ausgibt. Dabei wird das Ausgabesignal 35 je nachdem, ob es sich bei der Profilabweichung um eine Profilumkehr oder um ein Fehlprofil handelt, an unterschiedlichen Pins des Abstandssensors 19 ausgegeben.

Der Ausgabezustand 51 weist eine definierte Dauer von 200 ms auf, die der Dauer der Ausgabe des Ausgabesignals 35 entspricht. Nach Ablauf dieser Dauer geht der endliche Automat 39, ohne dass es hierzu eines weiteren Signals oder Ereignisses bedarf, in den Ruhezustand 43 über, so dass die Profilerkennung wieder ruht. Sobald ein neues Aktivierungsereignis eintritt, also insbesondere die nächste Anordnung 11 in den Detektionsbereich 21 des Abstandssensors 19 gelangt, wird die Profilerkennung erneut in Gang gesetzt und läuft wiederum wie vorstehend beschrieben ab.

Alternativ zu der Erkennung eines Profils einer Anordnung 11, die wie durch die Fig. 1 und 2 veranschaulicht mehrere voneinander beabstandete Objekte 13 umfasst, ist das Verfahren zur Profilerkennung grundsätzlich auch geeignet, ein Profil einer Anordnung 11, die als zusammenhängende Einheit ohne Abstände zwischen verschiedenen Objekten 13 ausgebildet ist oder aber lediglich ein Objekt 13 umfasst, auf eine Übereinstimmung mit einem Referenzprofil zu überprüfen. Auf diese Weise kann dann anstelle einer korrekten Reihung mehrerer Objekte 13 eine korrekte Oberflächenform der Anordnung 11 oder eines einzelnen Objekts (zumindest jeweils entlang des Profils) überwacht werden.

### Bezugszeichenliste

- 11: Anordnung
- 13: Objekt
- 13': einem Objekt entsprechender Abschnitt
- 15: Träger
- 15': einem Träger entsprechender Abschnitt
- 17: Förderband
- 19: Abstandssensor
- 21: Detektionsbereich
- 23: jeweilige Oberfläche
- 25: Oberseite
- 27: Auslösevorrichtung
- 29: Detektionsstrahl
- 31: Triggersignal
- 33: Abstandsverlaufskurve
- 35: Ausgabesignal
- 37.0: Grundwertebereich
- 37.1: erster Wertebereich
- 37.2: zweiter Wertebereich
- 37.4: vierter Wertebereich
- 39: endlicher Automat
- 41: Einschaltzustand
- 43: Ruhezustand
- 45.0: Grundzustand
- 45.1: erster Messzustand
- 45.2: zweiter Messzustand
- 45.3: dritter Messzustand
- 45.4: vierter Messzustand
- 47: Abbruchzustand
- 49: Auswertezustand
- 51: Ausgabezustand

## Patentansprüche

1. Verfahren zur Erkennung eines Profils einer einen Detektionsbereich (21) eines Abstandssensors (19) durchlaufenden Anordnung (11),
wobei der Abstandssensor (19) dazu ausgebildet ist, fortlaufend einen Abstand einer in dem Detektionsbereich (21) des Abstandssensors (19) befindlichen jeweiligen Oberfläche (23) der Anordnung (11) zu dem Abstandssensor (19) zu ermitteln,
wobei das Verfahren entsprechend einem endlichen Automaten (39) ausgebildet ist, der zumindest einen Ruhezustand (43), einen Auswertezustand (49) und mehrere Messzustände (45) aufweist,
wobei den Messzuständen (45) jeweils ein Wertebereich (37) des Abstandes zugeordnet ist,
wobei der endliche Automat (39) aus dem Ruhezustand (43) in Reaktion auf ein Aktivierungsereignis in einen Messzustand (45) übergeht,
wobei der endliche Automat (39) aus einem Messzustand (45) in einen anderen Messzustand (45) übergeht, wenn der Abstandssensor (19) einen Abstand ermittelt, der innerhalb des dem anderen Messzustand (45) zugeordneten Wertebereichs (37) liegt,
wobei eine Abfolge der Messzustände (45) erfasst wird,
wobei der endliche Automat (39) aus einem Messzustand (45) in Reaktion auf ein Deaktivierungsereignis in den Auswertezustand (49) übergeht,
und wobei im Auswertezustand (49) in Abhängigkeit von einem Vergleich der erfassten Abfolge mit einer dem zu erkennenden Profil entsprechenden Referenzabfolge festgestellt wird, ob eine Profilübereinstimmung oder eine Profilabweichung vorliegt.

2. Verfahren nach Anspruch 1,
wobei einer der Messzustände (45) einen Grundzustand (45.0) darstellt, und wobei der endliche Automat (39) aus dem Ruhezustand (43) in Reaktion auf das Aktivierungsereignis in den Grundzustand (45.0) übergeht, wobei vorzugsweise vorgesehen ist, dass aus einem Messzustand (45), der nicht der Grundzustand (45.0) ist, kein unmittelbarer Übergang in einen anderen Messzustand (45) erfolgt, der nicht der Grundzustand (45.0) ist.

3. Verfahren nach zumindest einem der vorstehenden Ansprüche, wobei
- der endliche Automat (39) aus dem Ruhezustand (43) in einen Messzustand (45) übergeht, wenn der Abstandssensor (19) einen Abstand ermittelt, der innerhalb des dem Messzustand (45) zugeordneten Wertebereichs (37) liegt, oder
- dem Ruhezustand (43) ein Wertebereich (37) zugeordnet ist, und der endliche Automat (39) aus einem Messzustand (45) in den Auswertezustand (49) übergeht, wenn der Abstandssensor (19) einen Abstand ermittelt, der innerhalb des dem Ruhezustand (43) zugeordneten Wertebereichs (37) liegt.

4. Verfahren nach zumindest einem der vorstehenden Ansprüche, wobei eine Auslösevorrichtung (27) vorgesehen ist, welche in Reaktion auf ein Eindringen der Anordnung (11) in den Detektionsbereich (21) des Abstandssensors (19) ein Aktivierungssignal erzeugt und an den Abstandssensor (19) ausgibt und/oder in Reaktion auf ein Austreten der Anordnung (11) aus dem Detektionsbereich (21) des Abstandssensors (19) ein Deaktivierungssignal erzeugt und an den Abstandssensor (19) ausgibt.

5. Verfahren nach zumindest einem der vorstehenden Ansprüche,
wobei der endliche Automat (39) einen Ausgabezustand (51) aufweist, in den der endliche Automat (39) nach dem Feststellen der Profilübereinstimmung oder der Profilabweichung übergeht und in dem der Abstandssensor (19) in Abhängigkeit von der Profilübereinstimmung oder der Profilabweichung ein Ausgabesignal (35) ausgibt,
wobei vorzugsweise vorgesehen ist, dass im Falle einer Profilübereinstimmung kein Ausgabesignal (35) ausgegeben wird.

6. Verfahren nach zumindest einem der vorstehenden Ansprüche, wobei zumindest zwischen einer Profilumkehr oder einem Fehlprofil als möglichen Profilabweichungen unterschieden wird.

7. Verfahren nach zumindest einem der vorstehenden Ansprüche,
wobei der Abstandssensor (19) dazu ausgebildet ist, fortlaufend einzelne Abstandswerte zu bestimmen,
und wobei der Abstand der jeweiligen Oberfläche (23) zu dem Abstandssensor (19) lediglich dann als in einem Wertebereich (37) liegend angenommen wird, wenn eine vorgegebene Anzahl einzelner Abstandswerte innerhalb des Wertebereichs (37) liegt.

8. Verfahren nach zumindest einem der vorstehenden Ansprüche, wobei der endliche Automat (39) einen Abbruchzustand (47) aufweist, und wobei der endliche Automat (39) aus einem Messzustand (45) in den Abbruchzustand (47) übergeht, wenn ein Fehlerkriterium erfüllt ist.

9. Verfahren nach Anspruch 8,
wobei der Abstandssensor (19) dazu ausgebildet ist, fortlaufend einzelne Abstandswerte zu bestimmen,
und wobei das Fehlerkriterium zumindest dann erfüllt ist, wenn eine vorgegebene Anzahl einzelner Abstandswerte außerhalb eines jeden Wertebereichs (37) liegt, der entweder dem aktuellen Messzustand (45) oder einem von dem aktuellen Messzustand (45) aus unmittelbar erreichbaren Messzustand (45) entspricht.

10. Verfahren nach zumindest einem der vorstehenden Ansprüche, wobei der Abstandssensor (19) ein Lichttaster ist, der dazu ausgebildet ist, ein Lichtsignal auszusenden, eine von der jeweiligen Oberfläche (23) erzeugte Reflexion des Lichtsignals zu empfangen, und aus der empfangenen Reflexion einen Abstand der jeweiligen Oberfläche (23) zum Lichttaster (19) zu ermitteln.

11. Verfahren nach Anspruch 10, wobei
- der Lichttaster (19) dazu ausgebildet ist, den Abstand der jeweiligen Oberfläche (23) zum Lichttaster (19) aus einer Laufzeit eines pulsförmigen Lichtsignals zur jeweiligen Oberfläche (23) und zurück oder aus der Phasenverschiebung eines von dem Lichttaster (1) ausgesandten modulierten Lichtsignales zu dem an der jeweiligen Oberfläche (23) reflektierten Lichtsignal zu ermitteln, oder
- der Lichttaster (19) dazu ausgebildet ist, den Abstand der jeweiligen Oberfläche (23) zum Lichttaster (19) anhand einer Triangulation zu ermitteln.

12. Verfahren nach zumindest einem der Ansprüche 1 bis 9,
wobei der Abstandssensor (19) als induktiver oder kapazitiver Abstandssensor (19) ausgebildet ist.

13. Abstandssensor (19) mit einer Computervorrichtung, welche die ermittelten Daten erhält und ein Computerprogramm ausführt, mit dem ein Verfahren gemäß zumindest einem der vorstehenden Ansprüche durchführbar ist.

14. Computerprogramm mit Programmcode-Mitteln, die derart eingerichtet sind, dass ein Verfahren nach zumindest einem der Ansprüche 1 bis 12 durchgeführt wird, wenn das Computerprogramm auf einer Computervorrichtung ausgeführt wird.

15. Computerprogrammprodukt mit Programmcode-Mitteln, die auf einem computerlesbaren Datenträger gespeichert sind und derart eingerichtet sind, dass ein Verfahren nach zumindest einem der Ansprüche 1 bis 12 durchgeführt wird, wenn das Programmprodukt auf einer Computervorrichtung ausgeführt wird.

## Claims

1. A method of recognizing a profile of an arrangement (11) passing through a detection zone (21) of a distance sensor (19),
wherein the distance sensor (19) is configured to continuously determine a distance of a respective surface (23) of the arrangement (11) located in the detection zone (21) of the distance sensor (19) from the distance sensor (19);
wherein the method is designed in accordance with a finite-state machine (39) which has at least a state of rest (43), an evaluation state (49) and a plurality of measurement states (45);
wherein a respective value range (37) of the distance is associated with the measurement states (45);
wherein the finite-state machine (39) transitions from the state of rest (43) into a measurement state (45) in response to an activation event;
wherein the finite-state machine (39) transitions from a measurement state (45) into another measurement state (45) when the distance sensor (19) determines a distance which is within the value range (37) associated with the other measurement state (45);
wherein a sequence of measurement states (45) is detected;
wherein the finite-state machine (39) transitions from a measurement state (45) into the evaluation state (49) in response to a deactivation event;
and wherein, in the evaluation state (49), a determination is made whether a profile agreement or a profile difference is present, in dependence on a comparison of the detected sequence with a reference sequence corresponding to the profile to be recognized.

2. A method in accordance with claim 1,
wherein one of the measurement states (45) represents a base state (45.0); and wherein the finite-state machine (39) transitions from the state of rest (43) into the base state (45.0) in response to the activation event, with provision preferably being made that no direct transition takes place from a measurement state (45) which is not the base state (45.0) into another measurement state (45) which is not the base state (45.0).

3. A method in accordance with at least one of the preceding claims,
wherein
- the finite-state machine (39) transitions from the state of rest (43) into a measurement state (45) when the distance sensor (19) determines a distance which is within the value range (37) associated with the measurement state (45); or
- a value range (37) is associated with the state of rest (43) and the finite-state machine (39) transitions from a measurement state (45) into the evaluation state (49) when the distance sensor (19) determines a distance which is within the value range (37) associated with the state of rest (43).

4. A method in accordance with at least one of the preceding claims,
wherein a triggering apparatus (27) is provided which generates an activation signal and outputs it to the distance sensor (19) in response to an intrusion of the arrangement (11) into the detection zone (21) of the distance sensor (19) and/or which generates a deactivation signal and outputs it to the distance sensor (19) in response to an exiting of the arrangement (11) from the detection zone (21) of the distance sensor (19).

5. A method in accordance with at least one of the preceding claims,
wherein the finite-state machine (39) has an output state (51) into which the finite-state machine (39) transitions after the determination of the profile agreement or of the profile difference and in which the distance sensor (19) outputs an output signal (35) in dependence on the profile agreement or the profile difference,
with provision preferably being made that no output signal (35) is output in the case of a profile agreement.

6. A method in accordance with at least one of the preceding claims,
wherein a distinction is at least made between a profile reversal or an incorrect profile as possible profile differences.

7. A method in accordance with at least one of the preceding claims,
wherein the distance sensor (19) is configured to continuously determine individual distance values;
and wherein the distance of the respective surface (23) from the distance sensor (19) is only assumed to be within a value range (37) when a predefined number of individual distance values are within the value range (37).

8. A method in accordance with at least one of the preceding claims,
wherein the finite-state machine (39) has an abort state (47);
and wherein the finite-state machine (39) transitions from a measurement state (45) into the abort state (47) when an error criterion is satisfied.

9. A method in accordance with claim 8,
wherein the distance sensor (19) is configured to continuously determine individual distance values;
and wherein the error criterion is at least satisfied when a predefined number of individual distance values are outside each value range (37) which either corresponds to the current measurement state (45) or to a measurement state (45) which can be reached directly from the current measurement state (45).

10. A method in accordance with at least one of the preceding claims,
wherein the distance sensor (19) is an optical sensor which is configured to transmit a light signal, to receive reflection of the light signal generated by the respective surface (23) and to determine a distance of the respective surface (23) from the optical sensor (19) from the received reflection.

11. A method in accordance with claim 10, wherein
- the optical sensor (19) is configured to determine the distance of the respective surface (23) from the optical sensor (19) from a time of flight of a pulse-shaped light signal to the respective surface (23) and back or from the phase shift of a modulated light signal transmitted by the optical sensor (19) with respect to the light signal reflected at the respective surface (23); or
- the optical sensor (19) is configured to determine the distance of the respective surface (23) from the optical sensor (19) using a triangulation.

12. A method in accordance with at least one of the claims 1 to 9,
wherein the distance sensor (19) is configured as an inductive or capacitive distance sensor (19).

13. A distance sensor (19) having a computer apparatus which receives the determined data and which executes a computer program by which a method in accordance with at least one of the preceding claims can be carried out.

14. A computer program having program code means which are adapted such that a method in accordance with at least one of the claims 1 to 12 is carried out when the computer program is executed on a computer apparatus.

15. A computer program product having program code means which are stored on a computer-readable data carrier and which are adapted such that a method in accordance with at least one of the claims 1 to 12 is carried out when the program product is executed on a computer apparatus.

## Revendications

1. Procédé de reconnaissance d'un profil d'un système (11) parcourant une zone de détection (21) d'un capteur de distance (19),
dans lequel le capteur de distance (19) est réalisé pour déterminer en continu une distance d'une surface respective (23) du système (11), située dans la zone de détection (21) du capteur de distance (19), par rapport au capteur de distance (19),
dans lequel
le procédé est mis en oeuvre en correspondance d'un automate fini (39) qui présente au moins un état de repos (43), un état d'évaluation (49) et plusieurs états de mesure (45),
une plage de valeurs respective (37) de la distance est associée aux états de mesure (45),
en réponse à un événement d'activation, l'automate fini (39) passe de l'état de repos (43) vers un état de mesure (45),
l'automate fini (39) passe d'un état de mesure (45) vers un autre état de mesure (45) lorsque le capteur de distance (19) détermine une distance qui se situe à l'intérieur de la plage de valeurs (37) associée à l'autre état de mesure (45),
on détecte une succession d'états de mesure (45),
en réponse à un événement de désactivation, l'automate fini (39) passe d'un état de mesure (45) vers l'état d'évaluation (49),
et dans l'état d'évaluation (49), en fonction d'une comparaison de la succession détectée avec une succession de référence correspondant au profil à reconnaître, on constate s'il se présente une concordance de profil ou une discordance de profil.

2. Procédé selon la revendication 1,
dans lequel
l'un des états de mesure (45) représente un état de base (45.0), et en réponse à l'événement d'activation, l'automate fini (39) passe de l'état de repos (43) vers l'état de base (45.0),
et il est de préférence prévu qu'à partir d'un état de mesure (45) qui n'est pas l'état de base (45.0), il n'y a pas de transition directe vers un autre état de mesure (45) qui n'est pas l'état de base (45.0).

3. Procédé selon l'une au moins des revendications précédentes, dans lequel
- l'automate fini (39) passe de l'état de repos (43) vers un état de mesure (45) lorsque le capteur de distance (19) détermine une distance qui se situe à l'intérieur de la plage de valeurs (37) associée à l'état de mesure (45), ou
- une plage de valeurs (37) est associée à l'état de repos (43), et l'automate fini (39) passe d'un état de mesure (45) vers l'état d'évaluation (49) lorsque le capteur de distance (19) détermine une distance qui se situe à l'intérieur de la plage de valeurs (37) associée à l'état de repos (43).

4. Procédé selon l'une au moins des revendications précédentes,
dans lequel
il est prévu un dispositif de déclenchement (27) qui, en réponse à une pénétration du système (11) dans la zone de détection (21) du capteur de distance (19), génère un signal d'activation et l'émet au capteur de distance (19) et/ou qui, en réponse à une sortie du système (11) hors de la zone de détection (21) du capteur de distance (19), génère un signal de désactivation et l'émet au capteur de distance (19).

5. Procédé selon l'une au moins des revendications précédentes, dans lequel
l'automate fini (39) présente un état d'émission (51) vers lequel l'automate fini (39) passe après avoir constaté la concordance de profil ou la discordance de profil et dans lequel le capteur de distance (19) émet un signal d'émission (35) en fonction de la concordance de profil ou de la discordance de profil,
et il est de préférence prévu qu'en cas de concordance de profil, aucun signal d'émission (35) n'est émis.

6. Procédé selon l'une au moins des revendications précédentes,
dans lequel
on distingue au moins entre un profil inversé ou un profil erroné à titre de discordances de profil possibles.

7. Procédé selon l'une au moins des revendications précédentes,
dans lequel
le capteur de distance (19) est réalisé pour définir en continu des valeurs de distance individuelles,
et la distance de la surface respective (23) par rapport au capteur de distance (19) est supposée comme étant dans une plage de valeurs (37) uniquement lorsqu'un nombre donné de valeurs de distance individuelles se trouve à l'intérieur de la plage de valeurs (37).

8. Procédé selon l'une au moins des revendications précédentes,
dans lequel
l'automate fini (39) présente un état d'interruption (47) et
l'automate fini (39) passe d'un état de mesure (45) vers l'état d'interruption (47) lorsqu'un critère d'erreur est satisfait.

9. Procédé selon la revendication 8,
dans lequel
le capteur de distance (19) est réalisé pour définir en continu des valeurs de distance individuelles,
et le critère d'erreur est satisfait au moins lorsqu'un nombre donné de valeurs de distance individuelles se situe à l'extérieur de chaque plage de valeurs (37) qui correspond soit à l'état de mesure actuel (45) soit à un état de mesure (45) à atteindre directement depuis l'état de mesure actuel (45).

10. Procédé selon l'une au moins des revendications précédentes,
dans lequel
le capteur de distance (19) est un capteur photoélectrique qui est réalisé pour émettre un signal lumineux, pour recevoir une réflexion du signal lumineux générée par la surface respective (23) et pour déterminer à partir de la réflexion reçue une distance de la surface respective (23) par rapport au capteur photoélectrique (19).

11. Procédé selon la revendication 10,
dans lequel
- le capteur photoélectrique (19) est réalisé pour déterminer la distance de la surface respective (23) par rapport au capteur photoélectrique (19) à partir d'une durée de parcours d'un signal lumineux pulsé vers la surface respective (23) et en retour ou à partir du déphasage d'un signal lumineux modulé émis par le capteur photoélectrique (1) par rapport au signal lumineux réfléchi sur la surface respective (23), ou
- le capteur photoélectrique (19) est réalisé pour déterminer la distance de la surface respective (23) par rapport au capteur photoélectrique (19) en se basant sur une triangulation.

12. Procédé selon l'une au moins des revendications 1 à 9,
dans lequel
le capteur de distance (19) est réalisé sous forme de capteur de distance inductif ou capacitif (19).

13. Capteur de distance (19) doté d'un dispositif informatique qui comprend les données déterminées et qui exécute un programme informatique permettant de mettre en oeuvre un procédé selon l'une des revendications précédentes.

14. Programme informatique comprenant des moyens de code de programme qui sont conçus de telle sorte qu'un procédé selon l'une au moins des revendications 1 à 12 est mis en oeuvre lorsque le programme informatique est exécuté sur un dispositif informatique.

15. Produit de programme informatique comprenant des moyens de code de programme qui sont mémorisés sur un support de données lisible par ordinateur et qui sont conçus de telle sorte qu'un procédé selon l'une au moins des revendications 1 à 12 est mis en oeuvre lorsque le produit de programme est exécuté sur un dispositif informatique.
